# EUROPEAN PATENT SPECIFICATION

(11) **EP 0 642 116 B1**
(45) Date of publication and mention of the grant of the patent: **22.09.1999**
(21) Application number: 94113017.1
(22) Date of filing: 20.08.1994
(51) Int. Cl.: G10L 3/00, G10L 5/00, G10L 7/02, G10L 9/06

(54) **Method of generating components of a speech database using the speech synthesis technique and machine for automatic speech recognition**
Verfahren zur Erzeugung von Komponenten einer Sprachdatenbasis unter Verwendung der Sprachsynthesetechnik und Gerät zur automatischen Spracherkennung
Procédé pour générer les composantes d'une base de données du langage utilisant la technique de synthèse de la parole et machine pour la reconnaissance automatique de la parole

(30) Priority: 06.09.1993 IT MI931905
(43) Date of publication of application: 08.03.1995
(73) Proprietor: ALCATEL, 75008 Paris (FR)
(72) Inventor: Riccio, Antonello, I-84132 Salerno (IT); Di Ronza, Benedetto, I-70125 Bari (IT)
(74) Representative: Knecht, Ulrich Karl, Dipl.-Ing.

(56) References cited:
- EP-A- 0 451 695
- EP-A- 0 518 638
- GB-A- 2 165 969

## Description

The present invention relates to a method of generating components of a speech database using the speech synthesis technique and to a machine for automatic speech recognition.

Basically, machines for speech recognition can be divided into two categories: the first ones are based upon conventional processors and realize the recognition by comparing the word to be recognized with words of a pre-established vocabulary; the second ones are based on special architectures such as neural networks and the pre-established vocabulary depends on a set of parameter values characterizing such architectures; hence the first machines require the generation of a speech database corresponding to the pre-established vocabulary for their operation, while the second ones require the generation of a suitable set of parameter values corresponding to the pre-established vocabulary which could be considered as a distributed speech database.

As known, the generation of such databases, either concentrated or distributed, occurs through long and repeated recording operations; in general, a team of speakers is selected and each speaker utters a number of times the speech elements corresponding to a predetermined vocabulary (in general words or, less frequently, the syllables); the acoustic signals corresponding to such utterance are acquired and often tape-recorded; subsequently a processing step may follow consisting, e.g., in a background noise filtering, in a sampling and in a digitizing; lastly, the database real generation is carried out, which may simply consist in storing on semiconductor storages according to a pre-established format or, in addition to and before storage, in the generation of suitable parameters, for instance LPC (Linear Predictive Code), starting from the acquired and processed acoustic signals ; in case of neural networks, the generation of the distributed database occurs by directly providing the network (that subsequently will carry out the recognition) with the acquired and processed acoustic signals and by leaving the network itself changing the values of its parameters during a step called "training".

The word "training", when referred to machines for speech recognition belonging to the first category, indicates an operative step during which the concentrated database is enhanced with new utterances of speech elements belonging or not to the predetermined vocabulary; not all such machines feature a "training" step.

The generation of such databases must be realized with great care since the recognition rate strongly depends on the used data base.

Substantially there are two methods by which the speakers can be allowed to utter the speech elements belonging to the predetermined vocabulary.

The first one consists in providing each speaker with a written list of the speech elements to be uttered: this method has the disadvantage, very heavy if speakers are unprofessional, of leading to an unnatural and erratic pronunciation due to the fact that the speaker starts the utterance with some voice characteristics, such as high energy, considerably imperative prosody, high speed of words alternated each other by a long silence, clear and well scanned articulation of syllables, and terminates the utterance with lower energy, more apathetic (i.e. meaningless) prosody, low speed of words alternated each other by a short silence, fluent articulation of syllables. Such a method, moreover, is not always applicable as in case of acquisition of speech databases from telephone line, where the speaker is chosen at random among the subscribers, or in a car where the driver cannot drive and read at the same time.

The second method can be applied, e.g., in the just mentioned cases and consists in asking the speaker to repeat the speech elements uttered by another people called "operator". This method is generally known and is considered as the closest prior art for the present invention. It has been discovered that, with such method, the utterance of the speaker is disadvantageously altered because the speaker tends to "copy" the pronunciation of the operator, more precisely: speed and energy of words and articulation of their components, accentuation of vowels, prosody of words, emphasis, cadence or rhythm of syllables and eventual personal characteristics of the operator (e.g. dialect, emotional, physical characteristics). If the operator or his personal characteristics change, as is the frequent case of prolonged recording operations, a totally uneven database will be obtained and this is a further disadvantage.

The object of the present invention is to overcome the drawbacks of the known technique.

This object is achieved through the method of generating a component of a speech database as set forth in claim 1, through the methods of generating and enhancing a speech database as set forth in claims 8 and 9 respectively, and through the machine for automatic speech recognition as set forth in claim 10.

Further advantageous aspects of the present invention are set forth in the subclaims.

By asking the speaker to repeat speech elements on the basis of a preventive series of voiced emissions corresponding to automatically synthesized utterances of such speech elements, the quality of the database thus obtained is better and uniform.

If such synthetic utterances are particularly unnatural, the copy-effect is limited.

Moreover, by making the sound emission be cadenced in a pre-established manner by a machine, the list effect is limited.

Lastly, by making such synthetic utterances be automatically synthesized still in accordance with the same method and the same synthesis parameters, the uniformity of the database is considerably improved.

The present invention will result better from the following description.

In accordance with the present invention, the method of generating a component of a speech database corresponding to the utterance of a speech element, comprises the steps of :
a) emitting an automatically synthesized utterance of the speech element,
b) waiting for a speech acoustic signal corresponding to an utterance of the speech element, and
c) acquiring such speech acoustic signal.

Such synthesized utterance can be synthesized starting from a text or from a natural pronunciation so modified to be unnatural, in particular prosodically unnatural.

Such acquired speech acoustic signal conceptually corresponds to the desired component of the speech database.

It has been said "conceptually" because the component assumes very different forms depending on the circumstances: for instance, in the case of a neural network speech database, it will be formed by some values of network parameters or by some variations of the same not connected in a simple way to the acquired acoustic signal and calculated automatically by the network itself according to a predetermined algorithm.

Then, such acquired speech acoustic signal is processed: sometimes by carrying out a simple sampling and digitizing sometimes through complicated digital coding algorithms, still sometimes through analog operations.

The generation of a speech database component can be carried out either prior to the speech recognition step from equipments arranged on purpose or during the same step from the same machine for speech recognition.

In the first case, the acquisition step is almost always overseen by an operator who takes care at least of the recording operations and who has the possibility of recognizing the occurrence of anomalous conditions and find a remedy for them.

In particular, in the second case, it is to advantage that the method further comprises the step of :
d) verifying that the acquired speech acoustic signal corresponds to an utterance of the voice element, e.g., through comparison with the synthesized utterance.

Should this verification be unsuccessful, such anomalous condition can be signalled.

Moreover, it may be advisable to provide that, if step b) is longer than a predetermined period of time, step c) does not take place; hence the generation of the element has failed and such anomalous condition can be signalled.

Such signallings are useful to the speaker who is uttering the speech element of a vocabulary in order that he can find a remedy for them.

The fact that the utterance is synthetic can be advantageously utilized in two different ways: if the pronunciation is greatly unnatural, the speaker will be neither able nor inclined to "copy" such pronunciation (consequently the synthesizer will be very easy to realize and cheaper); if on the other hand the synthetic pronunciation is fairly natural, the speaker will be inclined to copy it, of course; therefore, it can be thought to individuate, through laboratory tests, those values of the synthesis parameters which allow the achievement of an "ideal" pronunciation from the speaker that is to say which provides the best results during recognition step; in any case the possibility of varying the synthesis parameters will allow the indirect control of the speaker's pronunciation advantageously.

Step a) can be preceded by a step of taking the synthetic pronunciation out of storage means or out of an automatic synthesis step of such pronunciation starting from the corresponding speech element.

Methods of generating and increasing speech databases can be derived on the basis of the method of generating only one component of a speech database, just described.

In accordance with the present invention, the method of generating a speech database corresponding to a predetermined vocabulary comprising a plurality of speech elements provides that the steps of the method just described are repeated at least once for each speech element of the vocabulary.

According to the present invention, the method of enhancing a speech database corresponding to utterances of speech elements belonging to a predetermined vocabulary, through new utterances of speech elements belonging or not to such vocabulary, provides that the steps of the method just described are repeated for each new utterance.

It has been explained how the machines for automatic speech recognition provide a "training" operative step during which the speech database corresponding to a recognition vocabulary of speech elements is generated or enhanced.

The machine for automatic speech recognition, in accord to the present invention, during the training step is designed to prepare itself in order to realize the steps of the method described above.

In a particularly simple embodiment, such machine comprises storage means capable of containing automatically synthesized utterances of speech elements of the recognition vocabulary.

In this circumstance, it will be enough to read out from such storage means the various utterances, emit them one at a time and wait for the reciter to repeat them.

Such storage means may coincide with those for containing the speech database.

Starting from an extremely simple initial speech database having only one component for each speech element of the vocabulary, such database can be enlarged by using the utterances of the initial database as synthetic utterances: if the first ones come from automatic synthesis operations they can be emitted without further processing, otherwise they can be modified in such a way as to result unnatural, as already said.

In a second embodiment, such machine comprises an automatic speech synthesizer capable of synthesizing and emitting utterances of speech elements also not comprised in the recognition vocabulary.

The recognition vocabulary is chosen during production; it may be contemplated that the purchaser personalizes the vocabulary by adding personal speech elements.

Such personal speech elements may, e.g., be introduced into such machine in a textual form and synthesized and emitted by the synthesizer during the training step.

## Claims

1. Method of generating a component of a speech database corresponding to the utterance of a speech element, comprising the steps of :
a) emitting an automatically synthesized utterance of said speech element,
b) waiting for a speech acoustic signal corresponding to an utterance of said speech element, and
c) acquiring said speech acoustic signal; whereby such acquired speech acoustic signal conceptually corresponds to said component.

2. Method according to claim 1, characterized in that said acquired speech acoustic signal is processed.

3. Method according to claim 1, characterized in that it further comprises the step of
d) verifying that said acquired speech acoustic signal corresponds to an utterance of said speech elements through comparison with said synthesized utterance.

4. Method according to claim 1, characterized in that, if said step b) is longer than a predetermined period of time, said step c) does not take place and such anomalous condition is signalled.

5. Method according to claim 1, characterized in that said synthesized utterance is so modified to be of unnatural type.

6. Method according to claim 1, characterized in that said step a) is preceded by a step for extracting said utterance from storage means.

7. Method according to claim 1, characterized in that said step a) is preceded by a step of automatic synthesizing said utterance starting from the corresponding speech element.

8. Method of generating a speech database corresponding to a predetermined vocabulary comprising a plurality of speech elements, characterized in that said steps of the method of claim 1 are repeated at least once for each speech element of said vocabulary.

9. Method of enhancing a speech database corresponding to utterances of speech elements belonging to a predetermined vocabulary, through new utterances of speech elements belonging or not to said vocabulary, characterized in that the steps of the method of claim 1 are repeated for each new utterance.

10. Machine for the automatic recognition of speech in relation to a predetermined recognition vocabulary of speech elements, characterized by
a) means for emitting automatically synthesized utterances of said speech elements,
b) means for waiting for a speech acoustic signal corresponding to an utterance of a said speech element, and
c) means for acquiring said speech acoustic signal, whereby such acquired speech acoustic signal conceptually corresponds to a component to be trained for said recognition vocabulary.

11. Machine according to claim 10, characterized in that it comprises storage means designed to contain automatically synthesized utterances of speech elements of said recognition vocabulary.

12. Machine according to claim 10, characterized in that it comprises an automatic speech synthesizer designed to synthesize and emit utterances of speech elements even not comprised in said recognition vocabulary.

## Patentansprüche

1. Verfahren zum Erzeugen einer Komponente einer Sprachdatenbank entsprechend der Äußerung eines Sprachelements, das die Schritte aufweist:
a) Ausgeben einer automatisch synthetisierten Äußerung des Sprachelements,
b) Warten auf ein akustisches Sprachsignal entsprechend einer Äußerung des Sprachelements; und
c) Erlangen des akustischen Sprachsignals;
wobei das erlangte alustische Sprachsignal konzeptionell der Komponente entspricht.

2. Verfahren nach Anspruch 1, dadurch gekennzeichnet, daß das erlangte akustische Sprachsignal verarbeitet wird.

3. Verfahren nach Anspruch 1, dadurch gekennzeichnet, daß es ferner den Schritt umfaßt:
d) durch Vergleich mit der synthetisierten Äußerung Verifizieren, daß das erlangte akustische Sprachsignal einer Äußerung des Sprachelements entspricht.

4. Verfahren nach Anspruch 1, dadurch gekennzeichnet, daß, sofern der Schritt b) länger als eine vorbestimmte Zeitdauer ist, der Schritt c) nicht stattfindet und ein solches anomales Ereignis angezeigt wird.

5. Verfahren nach Anspruch 1, dadurch gekennzeichnet, daß die synthetisierte Äußerung so modifiziert wird, daß sie von unnatürlicher Art ist.

6. Verfahren nach Anspruch 1, dadurch gekennzeichnet, daß dem Schritt a) ein Schritt des Extrahieres der Äußerung aus dem Speichermittel vorangeht.

7. Verfahren nach Anspruch 1, dadurch gekennzeichnet, daß dem Schritt a) ein Schritt des automatischen Synthetisierens der Äußerung ausgehend von dem entsprechenden Sprachelement vorangeht.

8. Verfahren zum Erzeugen einer Sprachdatenbank entsprechend einem vorbestimmten Vokabular, das eine Mehrzahl von Sprachelementen enthält, dadurch gekennzeichnet, daß die Schritte des Verfahrens nach Anspruch 1 für jedes Sprachelement des Vokabulars wenigstens einmal wiederholt werden.

9. Verfahren zum Erweitern einer Sprachdatenbank entsprechend Äußerungen von zu einem vorbestimmten Vokabular gehörenden Sprachelementen durch neue Äußerungen von Sprachelementen, die zu dem Vokabular gehören oder nicht, dadurch gekennzeichnet, daß die Schritte des Verfahrens nach Anspruch 1 für jede neue Äußerung wiederholt werden.

10. Maschine zur automatischen Spracherkennung bezüglich eines vorbestimmten Erkennungsvokabulars von Sprachelementen, gekennzeichnet durch
a) Mittel zum Ausgeben von automatisch synthetisierten Äußerungen der Sprachelemente,
b) Mittel zum Warten auf ein akustisches Sprachsignal entsprechend einer Äußerung des Sprachelements, und
c) Mittel zum Erlangen des akustischen Sprachsignals, wobei ein solches erlangtes akustisches Sprachsignal konzeptionell einer zu trainierenden Komponente für das Erkennungsvokabular entspricht.

11. Maschine nach Anspruch 10, dadurch gekennzeichnet, daß sie ein Speichermittel umfaßt, das dafür vorgesehen ist, automatisch synthetisierte Äußerungen von Sprachelementen des Erkennungsvokabulars zu enthalten.

12. Maschine nach Anspruch 10, dadurch gekennzeichnet, daß sie einen automatischen Sprachsynthesator umfaßt, der ausgelegt ist, sogar Äußerungen von Sprachelementen, die nicht in dem Erkennungsvokabular enthalten sind, zu synthetisieren und auszugeben.

## Revendications

1. Procédé pour générer une composante d'une base de données de la parole correspondant à la prononciation d'un élément de parole, comprenant les étapes consistant à :
a) émettre une prononciation automatiquement synthétisée dudit élément de parole,
b) attendre un signal acoustique vocal correspondant à une prononciation dudit élément de parole, et
c) acquérir ledit signal acoustique vocal ;
de telle manière que ce signal acoustique vocal corresponde de manière conceptuelle à ladite composante.

2. Procédé selon la revendication 1, caractérisé en ce que ledit signal acoustique vocal acquis est traité.

3. Procédé selon la revendication 1, caractérisé en ce qu'il comprend en outre l'étape consistant à
d) vérifier que ledit signal acoustique vocal acquis correspond à une prononciation desdits éléments de parole par comparaison avec ladite prononciation synthétisée.

4. Procédé selon la revendication 1, caractérisé en ce que, si l'étape b) est plus longue qu'une durée prédéterminée, ladite étape c) n'a pas lieu et cet état anormal est signalé.

5. Procédé selon la revendication 1, caractérisé en ce que ladite prononciation synthétisée est modifiée de manière à être de type artificiel.

6. Procédé selon la revendication 1, caractérisé en ce que ladite étape a) est précédée d'une étape pour extraire ladite prononciation des moyens de mémoire.

7. Procédé selon la revendication 1, caractérisé en ce que ladite étape a) est précédée d'une étape de synthèse automatique de ladite prononciation à partir de l'élément de parole correspondant.

8. Procédé pour générer une base de données de la parole correspondant à un vocabulaire prédéterminé comprenant une pluralité d'éléments de parole, caractérisé en ce que lesdites étapes du procédé de la revendication 1 sont répétées au moins une fois pour chaque élément de parole dudit vocabulaire.

9. Procédé pour améliorer une base de données de la parole correspondant à des prononciations d'éléments de la parole appartenant à un vocabulaire prédéterminé, au moyen de nouvelles prononciations d'éléments de parole appartenant ou non audit vocabulaire, caractérisé en ce que les étapes du procédé de la revendication 1 sont répétées à chaque nouvelle prononciation.

10. Machine de reconnaissance automatique de la parole en rapport avec un vocabulaire de reconnaissance prédéterminé d'éléments de parole, caractérisée par
a) des moyens pour émettre des prononciations automatiquement synthétisées desdits éléments de parole,
b) des moyens pour attendre un signal acoustique vocal correspondant à une prononciation d'un dit élément de parole, et
c) des moyens pour acquérir ledit signal acoustique vocal, de telle manière que ce signal acoustique vocal acquis corresponde de manière conceptuelle à une composante pour être simulé pour ledit vocabulaire de reconnaissance.

11. Machine selon la revendication 10, caractérisée en ce qu'elle comprend des moyens de mémoire conçus pour contenir des prononciations automatiquement synthétisées d'éléments de parole dudit vocabulaire de reconnaissance.

12. Machine selon la revendication 10, caractérisée en ce qu'elle comprend un synthétiseur de parole automatique conçu pour synthétiser et émettre des prononciations d'éléments de parole même s'ils ne sont pas compris dans ledit vocabulaire de reconnaissance.
